# EUROPÄISCHE PATENTANMELDUNG

(11) **EP 3 715 621 A1**
(43) Veröffentlichungstag der Anmeldung: **30.09.2020**
(21) Anmeldenummer: 19166331.9
(22) Anmeldetag: 29.03.2019
(51) Int. Cl.: F02N 9/02, F02N 9/04, F02B 37/00, F02B 33/44, F02D 41/00

(54) **LUFTZUFÜHRSYSTEM FÜR EINEN VERBRENNUNGSMOTOR**

(71) Anmelder: ABB Schweiz AG, 5400 Baden (CH)
(72) Erfinder: Mathey, Christoph, 5442 Fislisbach (CH); Ryser, Raphael, 5400 Baden (CH)
(74) Vertreter: Zimmermann & Partner Patentanwälte mbB

(57) **Zusammenfassung**

Ein Luftzuführsystem für einen Verbrennungsmotor wird hierin beschrieben. Das Luftzufuhrsystem weist einen Ladeluftreceiver (1) zum Erhalten von Ladeluft und ein Startluft-System (10) auf. Das Startluft-System (10) ist eingerichtet, um dem Zylinder des Verbrennungsmotors bei einem Startvorgang des Verbrennungsmotors intermittierend Startluft, insbesondere von einer Startluftzufuhr, zuzuführen. Der Ladeluftreceiver (1) ist mit dem Startluft-System (10) über ein Ladeluft-Absperrventil (6) verbunden, um dem Startluft-System (10) im Teillastbetrieb des Verbrennungsmotors Ladeluft von dem Ladeluftreceiver (1) zuzuführen, so dass das Startluft-System (10) dem Zylinder bei einem Teillastbetrieb des Verbrennungsmotors intermittierend Ladeluft zuführt. Weiterhin werden ein Verbrennungsmotor und ein Verfahren zum Betreiben eines Verbrennungsmotors beschrieben.

## Beschreibung

### Technisches Gebiet

Die Erfindung betrifft ein Luftzuführsystem für einen Verbrennungsmotor, einen Verbrennungsmotor und ein Verfahren zum Betreiben eines Verbrennungsmotors.

### Hintergrund

Verbrennungsmotoren, insbesondere Großmotoren, im mittelschnelllaufenden Segment werden heute vermehrt mit sogenannten Miller-Steuerzeiten und hocheffizienter Hochdruckaufladung ausgestattet. Die Steuerzeiten sind dadurch charakterisiert, dass der Einlassschluss vor dem unteren Totpunkt stattfindet. Diese Ausführung führt einerseits dazu, dass der Verbrauch sinkt und durch die interne Expansion der NOx-Ausstoß beträchtlich gemindert wird; jedoch andererseits das Start-, Beschleunigungs- und Teillastbetriebsverhalten negativ beeinflusst werden.

Bedingt durch extreme Miller-Steuerzeiten gelangt etwa bei Leerlauf nur so wenig Masse in den Zylinder, so dass bei einem Dieselmotor in der Kompressionsphase die benötigte Zündtemperatur nicht erreicht wird und somit ein Starten des Motors nicht möglich ist. Darüber hinaus ist die Füllung in einem großen Bereich des Teillastbetriebes so gering, so dass eine rauchfreie Verbrennung bei vertretbaren Abgastemperaturen nicht gewährleistet werden kann.

Bei Gasmotoren mit Miller-Steuerzeiten wirkt sich die niedrige Temperatur am Ende der Kompressionsphase negativ auf die Zündfähigkeit und damit auf das Laufverhalten des Motors aus. Generell kann durch Miller-Steuerzeiten das Beschleunigungs- bzw. Ansprechverhalten negativ beeinflusst werden. Zusätzlich kann es bei Leerlauf und im Niedriglastbetrieb zu Betriebszuständen kommen, bei denen sich ein unerwünschtes negatives Druckgefälle zwischen dem Raum oberhalb und unterhalb des Kolbens einstellt.

Als Gegenmaßnahme zu dem teilweise unbefriedigenden Betriebsverhalten von Verbrennungsmotoren mit Miller-Steuerzeiten bei tiefen Lasten kommen heute verschiedene Technologien zum Einsatz. Einige dieser Technologien zielen beispielsweise darauf ab, den Einlassschluss im Teillastbetrieb zu verändern.

Angesichts des vorstehend Erwähnten besteht Bedarf an weiteren Verbesserungen.

### Zusammenfassung der Erfindung

Diese Aufgabe wird zumindest teilweise gelöst durch ein Luftzuführsystem gemäß Anspruch 1. Ferner, wird die Aufgabe durch einen Verbrennungsmotor gemäß Anspruch 14 und ein Verfahren zum Betreiben eines Verbrennungsmotors gemäß Anspruch 15 gelöst. Weitere Ausführungsformen, Modifikationen und Verbesserungen ergeben sich anhand der folgenden Beschreibung und der beigefügten Ansprüche.

Gemäß einer Ausführungsform wird ein Luftzuführsystem für einen Verbrennungsmotor, insbesondere für einen Verbrennungsmotor mit Miller-Steuerzeiten bereitgestellt. Das Luftzuführsystem weist einen Ladeluftreceiver zum Erhalten von Ladeluft und ein Startluft-System auf. Das Startluft-System weist eine mit einem Zylinder des Verbrennungsmotors verbundene Startluftversorgungsleitung auf. Ferner ist das Startluft-System eingerichtet, um dem Zylinder des Verbrennungsmotors bei einem Startvorgang des Verbrennungsmotors intermittierend Startluft, insbesondere von einer Startluftzufuhr, zuzuführen. Der Ladeluftreceiver ist mit dem Startluft-System über ein Ladeluft-Absperrventil verbunden, um dem Startluft-System im Teillastbetrieb des Verbrennungsmotors Ladeluft von dem Ladeluftreceiver zuzuführen, so dass das Startluft-System über die Startluftversorgungsleitung dem Zylinder bei einem Teillastbetrieb des Verbrennungsmotors intermittierend Ladeluft zuführt.

Gemäß einer Ausführungsform wird ein Verbrennungsmotor, insbesondere ein Verbrennungsmotor mit Miller-Steuerzeiten, bereitgestellt. Der Verbrennungsmotor weist ein Luftzuführsystem nach einem der hierin offenbarten Ausführungsformen auf. Ferner weist der Verbrennungsmotor einen Zylinder auf, wobei das Startluft-System mit dem Zylinder verbunden ist, um dem Zylinder des Verbrennungsmotors bei einem Startvorgang des Verbrennungsmotors intermittierend Startluft zuzuführen. Der Verbrennungsmotor weist einen Verdichter, insbesondere eine Turboaufladevorrichtung, auf welche mit dem Ladeluftreceiver für die Zufuhr von Ladeluft zu dem Ladeluftreceiver verbunden ist.

Gemäß einer Ausführungsform wird ein Verfahren zum Betreiben eines Verbrennungsmotors, insbesondere eines Verbrennungsmotors mit Miller-Steuerzeiten, beschrieben, wobei der Verbrennungsmotor ein Startluft-System nach einem der hierin offenbarten Ausführungsformen aufweist. Das Verfahren umfasst Starten des Verbrennungsmotors, indem das Startluft-System einem Zylinder des Verbrennungsmotors intermittierend Startluft zuführt. Ferner umfasst das Verfahren ein Zuführen von Ladeluft zu dem Startluft-System im Teillastbetrieb des Verbrennungsmotors von dem Ladeluftreceiver, so dass das Startluft-System dem Zylinder intermittierend Ladeluft zuführt.

### Kurze Beschreibung der Figuren

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Die Figuren zeigen:
Figur 1A zeigt ein Luftzuführsystem für einen Verbrennungsmotor gemäß einer Ausführungsform.
Figur 1B zeigt ein Luftzuführsystem für einen Verbrennungsmotor gemäß einer Ausführungsform.
Figur 2 zeigt ein Luftzuführsystem für einen Verbrennungsmotor gemäß einer Ausführungsform.
Figur 3 zeigt ein Luftzuführsystem für einen Verbrennungsmotor gemäß einer Ausführungsform.

### Ausführliche Beschreibung

Gemäß einer Ausführungsform wird ein Luftzuführsystem für einen Verbrennungsmotor bereitgestellt. Bevorzugt handelt es sich um einen Verbrennungsmotor mit Miller-Steuerzeiten. Insbesondere wird ein Luftzuführsystem zur kombinierten Ladeluft-und Startluftzuführung zu einem Verbrennungsmotor bereitgestellt.

Das Luftzuführsystem weist ein Startluft-System 10 auf. Das Startluft-System 10 kann insbesondere beim Startvorgang des Verbrennungsmotors vorteilhaft eingesetzt werden. Das Startluft-System ermöglicht es verdichtete Luft, im Folgenden als Startluft bezeichnet, bei einem erhöhten Druck in einen Zylinder, insbesondere in den Brennraum, des Verbrennungsmotors einzuleiten, wobei ein oder mehrere Kolben des Verbrennungsmotors in Rotation versetzt werden, so dass eine Treibstoffversorgung eingeschaltet und der Motor gestartet werden kann.

Das Startluft-System 10 weist eine Startluftversorgungsleitung 7 auf. Die Startluftversorgungsleitung 7 ist mit dem Zylinder des Verbrennungsmotors verbunden. Der Verbrennungsmotor kann eine Vielzahl an Zylinder aufweisen, wobei das Startluft-System 10 über die Startluftversorgungsleitung 7 jeweils über alle Zylinder verbunden sein kann. Bei der Startluftversorgungsleitung 7 kann es sich um ein Geflecht an Leitungen und/oder eine Vielzahl an Leitungen handeln. Das Startluft-System 10 ist eingerichtet, um dem Zylinder des Verbrennungsmotors bei einem Startvorgang des Verbrennungsmotors intermittierend Startluft zuzuführen.

Die intermittierende Zufuhr umfasst gemäß einem Aspekt eine periodische Folge von Zuführ-Zeitintervallen, bei denen die Startluft über die Startluftversorgungsleitung zu dem Zylinder zugeführt wird, mit dazwischenliegenden Sperr-Intervallen, bei denen die Zufuhr unterbrochen ist. Die intermittierende Zufuhr erfolgt vorzugsweise periodisch und synchron zur Betätigung eines Einlassventils des Verbrennungsmotors (mit einer Periode, die ein konstantes Vielfaches der Periode der Betätigung eines Einlassventils ist, also etwa mit der gleichen Periode oder mit der halben oder doppelten Periode der Betätigung eines Einlassventils).

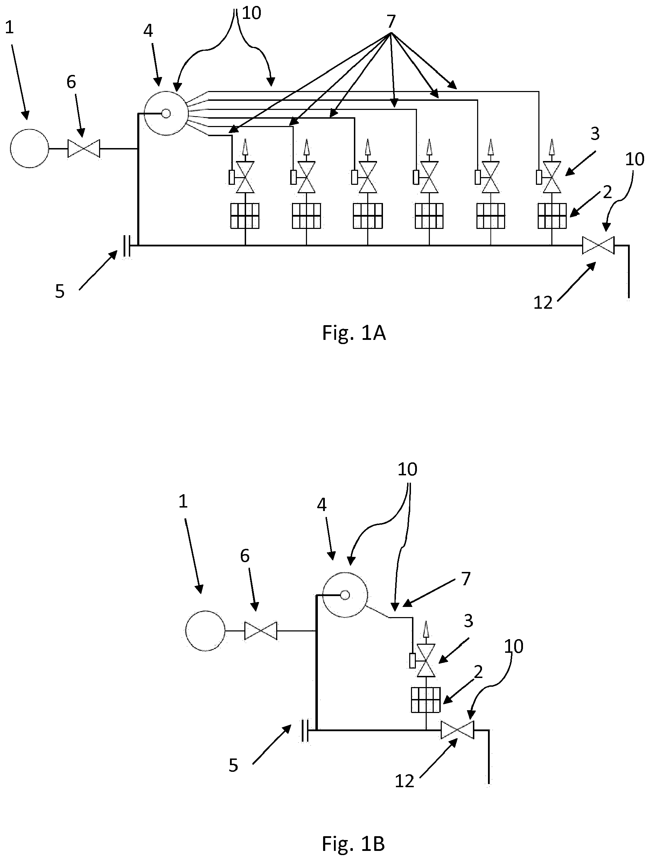

Die Startluftversorgungsleitung 7 kann mechanisch mit dem Zylinderkopf verbunden sein. Figuren 1A, 1B, 2 und 3 zeigen beispielhaft Ausführungsformen des Startluft-Systems 10 und der Startluftversorgungsleitung 7. Gemäß einem allgemeinen Aspekt ist die Startluftversorgungsleitung zusätzlich zu dem Einlass des Luft-Brennstoff-Gemischs über das Einlassventil vorgesehen, und hat insbesondere einen vom Einlassventil separaten Eingang zum Zylinder.

Das Startluft-System 10 kann mit einer Startluftzufuhr verbunden sein. Beispielsweise kann es sich bei der Startluftzufuhr um eine Druckgasflasche oder einen Druckbehälter handeln. Das Startluft-System 10 kann eingerichtet sein um dem Zylinder des Verbrennungsmotors bei einem Startvorgang des Verbrennungsmotors intermittierend Startluft von der Startluftzufuhr zuzuführen. Beispielsweise kann die Startluft einen Druck von etwa 30 bar haben.

Das Startluft-System 10 kann ein Startluft-Absperrventil 12 aufweisen. Das Startluft-Absperrventil 12 kann angesteuert sein, um bei einem Startvorgang des Verbrennungsmotors die Zufuhr von Startluft zu öffnen, und insbesondere die Verbindung der Startluftzufuhr zu dem Startluft-System 10 zu öffnen. In einem Teillastbetrieb und insbesondere in einem Vollastbetrieb des Verbrennungsmotors ist die Zufuhr von Startluft zu dem Startluft-System 10 bevorzugt gesperrt. Figuren 1A, 1B, 2 und 3 zeigen beispielhaft Ausführungsformen des Startluft-Absperrventils 12. Allgemein ist das Startluft-System eingerichtet, um die Zufuhr der Startluft bei Normalbetrieb (z.B. nach dem Startvorgang) abzuschalten (z.B. durch Sperren des Startluft-Absperrventils 12).

Das Startluft-System 10 kann ferner ein in der Startluftversorgungsleitung 7 angeordnetes Startluftventil 3 aufweisen. Insbesondere kann das Startluftventil 3 vor dem Zylinder des Verbrennungsmotors angeordnet sein. Falls die Startluftversorgungsleitung 7 mechanisch mit dem Zylinderkopf verbunden ist, kann das Startluftventil 3 am Zylinderkopf mechanisch verbunden sein. In einigen Ausführungsformen erfüllt das Startluftventil 3 die Aufgabe Luft oder Gas Fluss von dem Zylinder des Verbrennungsmotors in Richtung des Startluft-Systems 10 zu verhindern. In derartigen Fällen kann das Startluftventil 3 ein Rückschlagventil sein. In einigen anderen Ausführungsformen erfüllt das Startluftventil 3 zusätzliche Funktionen, die im weiteren Verlauf der Beschreibung erläutert werden. Insbesondere kann in solchen Fällen ein Startluftventil 3 verwendet werden, dass dazu eingerichtet ist Luft oder Gas Fluss in zwei Richtungen (vom Zylinder hin zu dem Startluft-System 10 und vom Startluft-System 10 hin zu dem Zylinder) zu ermöglichen und zu sperren. Beispielsweise kann das Startluftventil 3 in solchen Fällen ein elektromagnetisches Schaltventil sein. Figuren 1A, 1B, 2 und 3 zeigen beispielhaft Ausführungsformen des Startluftventils 3.

In einer Ausführungsform kann das Startluft-System 10 einen Startluftverteiler 4 aufweisen. Der Startluftverteiler 4 kann mit der Startluftversorgungsleitung 7 verbunden sein. Im Falle, dass der Verbrennungsmotor einen Zylinder aufweist, kann die Startluftversorgungsleitung 7 eine Leitung aufweisen und der Startluftverteiler 4 mit dieser Leitung der Startluftversorgungsleitung 7 verbunden sein. Eine Ausführungsform des Luftzuführsystem für einen Verbrennungsmotor aufweisend einen Zylinder ist beispielsweise in Figur 1B dargestellt. Im Falle, dass der Verbrennungsmotor eine Vielzahl Zylinder aufweist, kann die Startluftversorgungsleitung 7 eine Vielzahl an Leitungen aufweisen, wobei der Startluftverteiler 4 bevorzugt mit allen der Vielzahl an Leitungen der Startluftversorgungsleitung 7 jeweils verbunden ist. Eine Ausführungsform des Luftzuführsystem für einen Verbrennungsmotor aufweisend eine Vielzahl Zylinder ist beispielsweise in Figur 1A dargestellt. Gemäß einer Ausführungsform kann der Startluftverteiler 4 eine rotierende Welle mit einer oder mehrerer Öffnungen sein, die insbesondere synchron zu der Kurbelwelle des Verbrennungsmotors angetrieben werden (ggf. mit einem festen Übersetzungverhältnis, etwa einem Übersetzungverhältnis von 1:1 oder 1:2). Der Startluftverteiler 4 kann zur intermittierenden Zufuhr von Startluft, insbesondere von der Startluftzufuhr, zu dem Zylinder über die Startluftversorgungsleitung (7) eingerichtet sein.

Figuren 1A, 1B, 2 und 3 zeigen schematische Ausführungsformen des Luftzuführsystems, und insbesondere des Startluft-Systems 10. In den Figuren ist der Zylinder des Verbrennungsmotors nicht gezeigt. Der Fluss der Startluft (und wie später erläutert wird der Ladeluft) zu dem Zylinder des Verbrennungsmotors ist durch den Pfeil am oberen Abschnitt des Startluftventils 3 angedeutet.

Das Luftzufuhrsystem weist ferner einen Ladeluftreceiver 1 zum Erhalten von Ladeluft auf. Ladeluftreceiver als solche sind dem Fachmann bekannt. Unter einem Ladeluftreceiver 1 ist ein Druckraum zu verstehen, in dem ein Überdruck herrscht. In einigen Ausführungsformen kann der Überdruck in dem Ladeluftreceiver 1 von einem Verdichter erzeugt werden, insbesondere von einer Turboaufladevorrichtung. Der Verdichter, insbesondere die Turboaufladevorrichtung, kann mit dem Ladeluftreceiver für die Zufuhr von Ladeluft zu dem Ladeluftreceiver 1 verbunden sein.

Der Ladeluftreceiver 1 ist mit dem Startluft-System 10 über ein Ladeluft-Absperrventil 6 verbunden, um dem Startluft-System 10 im Teillastbetrieb des Verbrennungsmotors Ladeluft von dem Ladeluftreceiver 1 zuzuführen. Die Ladeluft kann somit von dem Ladeluftreceiver 1 dem Startluft-System 10 und von dem Startluft-System 10, mittels der Startluftversorgungsleitung 7, dem Zylinder des Verbrennungsmotors intermittierend zugeführt werden. Bevorzugterweise erfolgt das intermittierende Zuführen der Ladeluft bei einem Teillastbetrieb des Verbrennungsmotors.

Das Ladeluft-Absperrventil 6 kann angesteuert sein, um bei einem Startvorgang, und insbesondere in einem Vollastbetrieb, des Verbrennungsmotors eine Zufuhr von Ladeluft zu dem Startluft-System 10 zu sperren. In einem Teillastbetrieb des Verbrennungsmotors ist die Zufuhr von Ladeluft von dem Ladeluftreceiver 1 zu dem Startluft-System 10 bevorzugt geöffnet. Figuren 1A, 1B, 2 und 3 zeigen beispielhaft Ausführungsformen des Ladeluft-Absperrventils 6.

Das Zuführen von Startluft, insbesondere beim Startvorgang des Verbrennungsmotors, und das Zuführen von Ladeluft, insbesondere in einem Teillastbetrieb des Verbrennungsmotors, erfolgen bevorzugt zu definierten Zeitpunkten innerhalb eines Arbeitszyklus des Verbrennungsmotors. In anderen Worten erfolgt das Zuführen von Startluft und Ladeluft bevorzugt bei einer definierten Stellung (oder unterschiedlichen Zeitpunkten in der Öffnungs-/Schließphase) eines Einlassventils des Verbrennungsmotors oder einem definierten Drehwinkel einer Kurbelwelle des Verbrennungsmotors.

In einer Ausführungsform ist das Startluft-System 10 zur intermittierenden Zufuhr von Startluft und Ladeluft zu dem Zylinder in Abhängigkeit des Drehwinkels der Kurbelwelle des Verbrennungsmotors eingerichtet. Das Startluft-System 10 kann dazu eingerichtet sein die Zufuhr von Ladeluft zu dem Zylinder bei oder nach einem Öffnen des Einlassventils des Verbrennungsmotors zu ermöglichen. Das Startluft-System 10 kann dazu eingerichtet sein die Zufuhr von Ladeluft zu dem Zylinder vor oder bei Erreichen eines Drehwinkels der Kurbelwelle von 30°, bevorzugterweise 20°, nach einem unteren Totpunkt zu sperren.

Das Zuführen von Startluft, insbesondere beim Startvorgang des Verbrennungsmotors, und das Zuführen von Ladeluft, insbesondere in einem Teillastbetrieb des Verbrennungsmotors, erfolgen bevorzugt zu unterschiedlichen Zeitpunkten innerhalb eines Arbeitszyklus. In anderen Worten kann die intermittierende Zuführung der Ladeluft durch das Startluft-System 10 bei einem anderen Drehwinkel der Kurbelwelle als bei der Startluft erfolgen. Das Startluft-System 10 kann die Ladeluft in einem ersten Drehwinkelbereich der Kurbelwelle und/oder die Startluft in einem zweiten Drehwinkelbereich der Kurbelwelle intermittierend zuführen. Der erste Drehwinkelbereich kann vom zweiten Drehwinkelbereich verschieden sein.

Erfindungsgemäß können verschiedene Merkmale des Startluft-Systems 10 eingerichtet sein eine intermittierende Zufuhr der Ladeluft und/oder Startluft zu ermöglichen, und insbesondere die intermittierende Zuführung der Ladeluft durch das Startluft-System 10 bei einem anderen Drehwinkel der Kurbelwelle als der Startluft zu ermöglichen. Im Folgenden werden einige dieser Ausführungsformen mit Bezug auf die Figuren beschrieben. Die Merkmale dieser Ausführungsformen können jedoch beliebig kombiniert werden.

Gemäß einer Ausführungsform kann der Ladeluftreceiver 1 über eine Ladeluftversorgungsleitung mit dem Startluftverteiler 4 verbunden sein. Figuren 1A und 1B zeigen Ausführungsformen, bei dem der Ladeluftreceiver 1 mit dem Startluftverteiler 4 verbunden ist. Vorzugsweise ist dabei das Ladeluft-Absperrventil 6 in der Ladeluftversorgungsleitung vorgesehen. Der Startluftverteiler 4 kann dabei zur intermittierenden Zufuhr von Startluft und von Ladeluft zu dem Zylinder eingerichtet sein. Gemäß einer Ausführungsform kann der Startluftverteiler 4 eine rotierende Welle mit einer Öffnung sein, die insbesondere synchron zu der Kurbelwelle des Verbrennungsmotors angetrieben wird, wobei die Zufuhr von Startluft und/oder Ladeluft intermittierend erfolgt, wenn ein Überlapp zwischen der Öffnung der rotierenden Welle und der Startluftversorgungsleitung 7 vorhanden ist. Im Falle mehrerer Zylinder und mehrerer Leitungen der Startluftversorgungsleitung 7 (wie beispielsweise in Figur 1B dargestellt), kann die rotierende Welle mehrere voneinander versetzte Öffnungen aufweisen. In einer Ausführungsform kann der Startluftverteiler 4 weiterhin einen Phasensteller aufweisen. Der Phasensteller kann die intermittierende Zufuhr von Ladeluft bei einem anderen Drehwinkel der Kurbelwelle des Verbrennungsmotors als die intermittierende Zufuhr von Startluft zu ermöglichen. Optional kann in dieser Ausführungsform das Schaltventil 3 ein Rückschlagventil sein.

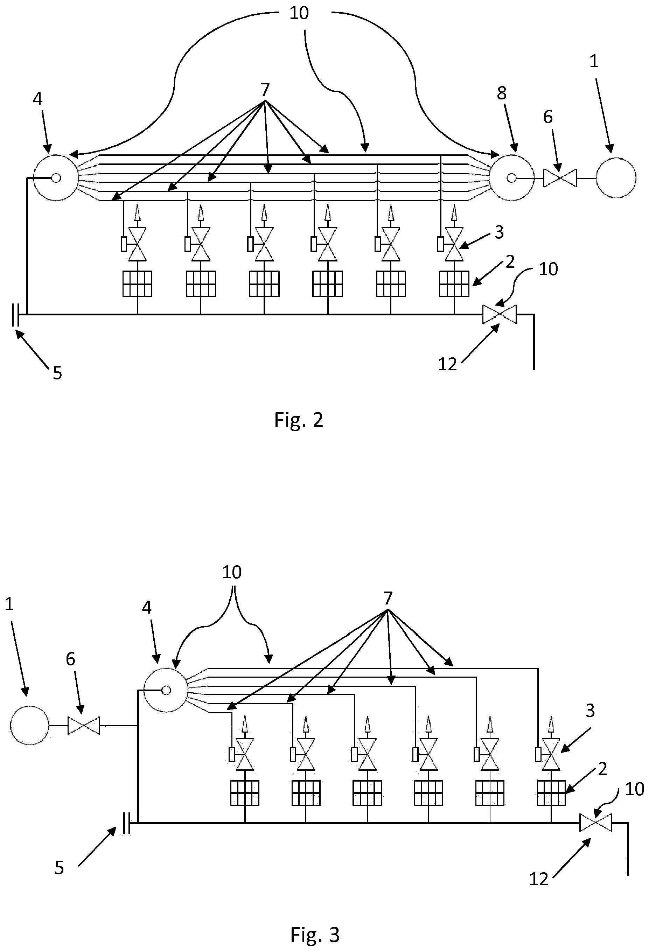

Gemäß einer Ausführungsform kann das Startluft-System 10 ferner, einen Ladeluftverteiler 8 aufweisen. Der Ladeluftverteiler 8 kann insbesondere zusätzlich zu dem Startluftverteiler 4 vorhanden sein. Der Ladeluftreceiver 1 und der Ladeluftverteiler 8 können über eine Ladeluftversorgungsleitung miteinander verbunden sein. Vorzugsweise ist dabei das Ladeluft-Absperrventil 6 in der Ladeluftversorgungsleitung vorgesehen. Figur 2 zeigt eine Ausführungsform, bei dem das Startluft-System 10 den Ladeluftverteiler 8 aufweist. Insbesondere kann die Startluftversorgungsleitung 7 den Ladeluftverteiler 8 und/oder den Startluftverteiler 4 mit dem Zylinder verbinden. Der Startluftverteiler 4 kann zur intermittierenden Zufuhr von Startluft zu dem Zylinder eingerichtet sein. Der Ladeluftverteiler 8 kann zur intermittierenden Zufuhr von Ladeluft zu dem Zylinder eingerichtet sein. In dem das Startluft-System 10 zwei Verteiler aufweist, den Startluftverteiler 4 und den Ladeluftverteiler 8, kann insbesondere ein Öffnungszeitpunkt und eine Öffnungsdauer für die Ladeluft unabhängig, und insbesondere bedarfsgerecht, von einem Öffnungszeitpunkt und einer Öffnungsdauer für die Startluft eingestellt werden. Vorteilhafterweise kann der Startluftverteiler 4 eine Nullstellung aufweisen, bei dem kein Luft oder Gas Fluss von der Startluftversorgungsleitung 7 durch den Startluftverteiler 4 erfolgen kann und/oder der Ladeluftverteiler 8 kann eine Nullstellung aufweisen, bei dem kein Luft oder Gas Fluss von der Startluftversorgungsleitung 7 durch den Ladeluftverteiler 8 erfolgen kann. Insbesondere bei Vorhandensein mehrerer Zylinder und mehrerer Verbindungen des Startluftverteilers 4 und/oder des Ladeluftverteilers 8 mit den Leitungen der Startluftversorgungsleitung 7 kann der Startluftverteiler 4 und/oder der Ladeluftverteiler 8 die Nullstellung aufweisen. In einer Ausführungsform können der Startluftverteiler 4 und/oder der Ladeluftverteiler 8 eine rotierende Welle sein, die insbesondere synchron zu der Kurbelwelle des Verbrennungsmotors angetrieben werden. Optional kann in dieser Ausführungsform das Schaltventil 3 ein Rückschlagventil sein.

Gemäß einer Ausführungsform kann der Ladeluftreceiver 1 über eine Ladeluftversorgungsleitung 7 mit dem Startluftverteiler 4 verbunden sein. Figur 3 zeigt eine Ausführungsform, bei dem der Ladeluftreceiver 1 mit dem Startluftverteiler 4 verbunden ist. Vorzugsweise ist dabei das Ladeluft-Absperrventil 6 in der Ladeluftversorgungsleitung 7 vorgesehen. Der Startluftverteiler 4 kann derart abschaltbar, bevorzugt in dem Teillastbetrieb des Verbrennungsmotors sein, dass eine dauerhafte Zufuhr der Ladeluft von dem Ladeluftreceiver 1 zu dem Startluft-System 10 ermöglicht werden kann, insbesondere unabhängig von der Kurbelwelle des Verbrennungsmotors. Im Falle mehrerer Zylinder kann der Startluftverteiler 4 derart abschaltbar sein, dass eine dauerhafte Zufuhr der Ladeluft zu allen Leitungen der Startluftversorgungsleitung 7 ermöglicht wird. Das in der Startluftversorgungsleitung 7 angeordnete Startluftventil 3 kann zur intermittierenden Zufuhr von Ladeluft und/oder Startluft zu dem Zylinder eingerichtet sein. Das Startluftventil 3 kann ein Schaltventil, insbesondere ein elektromagnetisches Schaltventil, sein. Der Öffnungszeitpunkt und/oder die Öffnungsdauer der intermittierenden Zufuhr der Ladeluft von dem Startluft-System 10 zu dem Zylinder des Verbrennungsmotors kann somit bedarfsgerecht für jeden Zylinder, und unabhängig von dem Öffnungszeitpunkt und/oder die Öffnungsdauer der intermittierenden Zufuhr der Startluft, ausgewählt werden. In einer Ausführungsform kann der Startluftverteiler 4 zur intermittierenden Zufuhr der Startluft eingerichtet sein, und das Startluftventil 3 zur intermittierenden Zufuhr der Ladeluft.

Das Luftzuführsystem, insbesondere das Startluft-System 10, kann ferner eine Steuerung zur intermittierenden Betätigung, d.h. das Öffnen und Schließen, des Startluftventils 3 zur intermittierenden Zufuhr von Startluft und/oder Ladeluft zu dem Zylinder aufweisen.

Optional kann das Luftzuführsystem in jeder der hierin beschriebenen Ausführungsformen einen Flammenwächter 2 aufweisen. Der Flammenwächter 2 kann in mindestens einer der Startluftzufuhr, der Startluftversorgungsleitung 7 oder, einer zum Ladeluftreceiver 1 führenden Ladelufteingangsleitung angeordnet sein. Der Flammenwächter 2 kann einen Flammendetektor und eine Steuereinheit zum Öffnen und Schließen der Luftzufuhr zum Zylinder, insbesondere zum Öffnen und Schließen des Startluftventils 3, aufweisen.

Optional kann das Luftzuführsystem in jeder der hierin beschriebenen Ausführungsformen ferner ein mit dem Startluft-System 10 verbundenes Überdruckventil 5 aufweisen. Das Überdruckventil 5 kann dazu eingerichtet sein bei Überschreiten eines Ansprechdrucks Luft aus dem Startluft-System 10 abzuleiten.

Gemäß einer Ausführungsform wird ein Verbrennungsmotor, insbesondere ein Verbrennungsmotor mit Miller-Steuerzeiten, bereitgestellt. Der Verbrennungsmotor weist ein Luftzuführsystem nach einem der hierin offenbarten Ausführungsformen auf. Ferner weist der Verbrennungsmotor einen Zylinder auf, wobei das Startluft-System 10 mit dem Zylinder verbunden ist, um dem Zylinder des Verbrennungsmotors bei einem Startvorgang des Verbrennungsmotors intermittierend Startluft zuzuführen. Vorzugsweise weist der Verbrennungsmotor eine Vielzahl an Zylinder auf, wobei das Startluft-System 10 über die Startluftversorgungsleitung 7 jeweils über alle Zylinder verbunden sein kann. Bei der Startluftversorgungsleitung 7 kann es sich um ein Geflecht an Leitungen und/oder eine Vielzahl an Leitungen handeln.

Der Verbrennungsmotor weist einen Verdichter, insbesondere eine Turboaufladevorrichtung, auf, welche mit dem Ladeluftreceiver 1 für die Zufuhr von Ladeluft zu dem Ladeluftreceiver 1 verbunden ist. Das Startluft-System 10 kann eingerichtet sein, um für die Zylinder mehrere voneinander verschiedene Zeitpunkte für die Zufuhr von Startluft bzw. Ladeluft vorzusehen. Das Zuführen von Startluft, insbesondere beim Startvorgang des Verbrennungsmotors, und das Zuführen von Ladeluft, insbesondere in einem Teillastbetrieb des Verbrennungsmotors, erfolgen bevorzugt zu unterschiedlichen Zeitpunkten innerhalb des Arbeitszyklus.

Gemäß einer Ausführungsform wird ein Verfahren zum Betreiben eines Verbrennungsmotors, insbesondere eines Verbrennungsmotors mit Miller-Steuerzeiten, beschrieben, wobei der Verbrennungsmotor ein Startluft-System 10 nach einem der hierin offenbarten Ausführungsformen aufweist. Das Verfahren umfasst das Starten des Verbrennungsmotors, indem das Startluft-System 10 einem Zylinder des Verbrennungsmotors intermittierend Startluft zuführt. Ferner umfasst das Verfahren ein Zuführen von Ladeluft zu dem Startluft-System 10 im Teillastbetrieb des Verbrennungsmotors von dem Ladeluftreceiver 1, so dass das Startluft-System 10 dem Zylinder intermittierend Ladeluft zuführt.

Vorteilhafterweise kann das Luftzufuhrsystem nach einem der hierin offenbarten Ausführungsformen bei einem Verbrennungsmotor mit einem bereits vorhanden Ladeluftreceiver und/oder ein oder mehreren bereits vorhandenen Merkmalen des Startluft-Systems 10 kostengünstig realisiert werden. Insbesondere sind bei Vorhandensein eines Ladeluftreceivers 1 und/oder ein oder mehreren Merkmalen des Startluft-Systems 10 keine erheblichen konstruktiven Änderungen notwendig um die Erfindung zu realisieren. Vorteilhafterweise erfordern die erfindungsgemäßen Ausführungsformen nur einen geringen Mehrbedarf an Komponenten für einen Verbrennungsmotor, wodurch sich ein günstiges Verhältnis zwischen Aufwand und Wirkung ergibt. Die intermittierende Zufuhr der Ladeluft durch den Ladeluftreceiver 1 mittels dem Startluft-System 10 kann die negativen Auswirkungen des "Miller-Effektes" bzw. der Miller-Steuerzeiten, insbesondere im Leerlauf und im Teillastbetrieb, eliminieren. Entgegen dem Stand der Technik ermöglicht das hierin beschriebene Luftzufuhrsystem die negativen Auswirkungen des "Miller-Effektes" bzw. der Miller-Steuerzeiten, insbesondere im Leerlauf und im Teillastbetrieb, zu eliminieren ohne konstruktive Änderungen am Einlassventil-Betätigungsmechanismus oder dem Einlassventil bzw. ohne Änderungen des Einlassschlusses vornehmen zu müssen. Die hierin beschriebenen Luftzufuhrsysteme können auch bei Verbrennungsmotoren ohne Miller-Steuerzeiten vorteilhaft eingesetzt werden, insbesondere im Leerlauf und im Teillastbetrieb.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

## Patentansprüche

1. Ein Luftzuführsystem für einen Verbrennungsmotor, insbesondere für einen Verbrennungsmotor mit Miller-Steuerzeiten, das Luftzuführsystem aufweisend:
einen Ladeluftreceiver (1) zum Erhalten von Ladeluft;
ein Startluft-System (10),
wobei das Startluft-System (10) eine mit einem Zylinder des Verbrennungsmotors verbundene Startluftversorgungsleitung (7) aufweist, wobei das Startluft-System (10) eingerichtet ist, um dem Zylinder des Verbrennungsmotors bei einem Startvorgang des Verbrennungsmotors intermittierend Startluft, insbesondere von einer Startluftzufuhr, zuzuführen,
wobei der Ladeluftreceiver (1) mit dem Startluft-System (10) über ein Ladeluft-Absperrventil (6) verbunden ist, um dem Startluft-System (10) im Teillastbetrieb des Verbrennungsmotors Ladeluft von dem Ladeluftreceiver (1) zuzuführen,
so dass das Startluft-System (10) über die Startluftversorgungsleitung (7) dem Zylinder bei einem Teillastbetrieb des Verbrennungsmotors intermittierend Ladeluft zuführt.

2. Luftzuführsystem nach Anspruch 1, wobei das Startluft-System (10) ein in der Startluftversorgungsleitung (7), insbesondere vor dem Zylinder des Verbrennungsmotors, angeordnetes Startluftventil (3) aufweist; wobei optional das Startluftventil (3) ein Rückschlagventil ist.

3. Luftzuführsystem nach einem der vorherigen Ansprüche, wobei das Ladeluft-Absperrventil (6) angesteuert ist, um bei einem Startvorgang des Verbrennungsmotors eine Zufuhr von Ladeluft zu dem Startluft-System (10) zu sperren und im Teillastbetrieb des Verbrennungsmotors die Zufuhr von Ladeluft von dem Ladeluftreceiver (1) zu öffnen, und/oder wobei das Startluft-System (10) ein Startluft-Absperrventil (12) aufweist, wobei das Startluft-Absperrventil (12) angesteuert ist, um bei einem Teillastbetrieb des Verbrennungsmotors eine Zufuhr von Startluft zu dem Startluft-System (10) zu sperren und bei einem Startvorgang die Zufuhr von Startluft zu öffnen.

4. Luftzuführsystem nach einem der vorherigen Ansprüche, wobei das Startluft-System (10) zur intermittierenden Zufuhr von Startluft und Ladeluft zu dem Zylinder in Abhängigkeit eines Drehwinkels einer Kurbelwelle des Verbrennungsmotors eingerichtet ist; und insbesondere zur Zufuhr von Ladeluft ab oder nach einem Öffnen eines Einlassventils des Verbrennungsmotors und/oder vor oder bis Erreichen eines Drehwinkels der Kurbelwelle von 30°, bevorzugterweise 20°, nach einem unteren Totpunkt.

5. Luftzuführsystem nach Anspruch 4, wobei das Startluft-System (10) die Ladeluft bei einem anderen Drehwinkel der Kurbelwelle intermittierend zuführt als bei der intermittierenden Zuführung der Startluft.

6. Luftzuführsystem nach einem der vorherigen Ansprüche, wobei das Startluft-System (10) einen mit der Startluftversorgungsleitung (7) verbundenen Startluftverteiler (4) zur intermittierenden Zufuhr von Startluft, und optional Ladeluft, von der Startluftzufuhr zu dem Zylinder über die Startluftversorgungsleitung (7) aufweist.

7. Luftzuführsystem nach Anspruch 6, wobei der Ladeluftreceiver (1) und der Startluftverteiler (4) über eine Ladeluftversorgungsleitung miteinander verbunden sind, wobei vorzugsweise das Ladeluft-Absperrventil (6) in der Ladeluftversorgungsleitung vorgesehen ist.

8. Luftzuführsystem nach Anspruch 6 oder 7, wobei der Startluftverteiler (4) zur intermittierenden Zufuhr von Startluft und von Ladeluft zu dem Zylinder eingerichtet ist, und insbesondere wobei der Startluftverteiler (4) weiterhin einen Phasensteller aufweist, um die intermittierende Zufuhr von Ladeluft bei einem anderen Drehwinkel der Kurbelwelle des Verbrennungsmotors als die intermittierende Zufuhr von Startluft zu ermöglichen.

9. Luftzuführsystem nach einem der Ansprüche 1 bis 8, wobei das Startluft-System (10) ferner, insbesondere zusätzlich zu dem Startluftverteiler (4), einen Ladeluftverteiler (8) aufweist, wobei der Ladeluftreceiver (1) und der Ladeluftverteiler (8) über eine Ladeluftversorgungsleitung miteinander verbunden sind, und wobei die Startluftversorgungsleitung (7) den Ladeluftverteiler (8) mit dem Zylinder verbindet, und insbesondere auch den Startluftverteiler (4) mit dem Zylinder verbindet.

10. Luftzuführsystem nach Anspruch 9, wobei der Ladeluftverteiler (8) zur intermittierenden Zufuhr von Ladeluft zu dem Zylinder eingerichtet ist.

11. Luftzuführsystem nach einem der vorangehenden Ansprüche, wobei das Startluft-System (10) ein in der Startluftversorgungsleitung (7) angeordnetes Startluftventil (3) zur intermittierenden Zufuhr von Startluft und/oder Ladeluft zu dem Zylinder aufweist.

12. Luftzuführsystem nach Anspruch 11, wobei der Ladeluftreceiver (1) und der Startluftverteiler (4) über eine Ladeluftversorgungsleitung miteinander verbunden sind, und optional die Ladeluftzufuhr des Startluftverteilers (4) im Teillastbetrieb geöffnet ist.

13. Luftzuführsystem nach einem der vorherigen Ansprüche, ferner aufweisend einen in mindestens einer der Startluftzufuhr, der Startluftversorgungsleitung (7) oder, einer zum Ladeluftreceiver (1) führenden Ladelufteingangsleitung angeordneten Flammenwächter (2), wobei der Flammenwächter (2) einen Flammendetektor und eine Steuereinheit zum Öffnen und Schließen der Ladeluftzufuhr zum Zylinder, insbesondere zum Öffnen und Schließen des Startluftventils (3), aufweist.

14. Ein Verbrennungsmotor, insbesondere ein Verbrennungsmotor mit Miller-Steuerzeiten, aufweisend:
- das Luftzuführsystem nach einem der Ansprüche 1 bis 13;
- einen Zylinder, wobei das Startluft-System (10) mit dem Zylinder verbunden ist, um dem Zylinder des Verbrennungsmotors bei einem Startvorgang des Verbrennungsmotors intermittierend Startluft zuzuführen; und
- ein Verdichter, insbesondere eine Turboaufladevorrichtung, welche mit dem Ladeluftreceiver (1) für die Zufuhr von Ladeluft zu dem Ladeluftreceiver (1) verbunden ist.

15. Verfahren zum Betreiben eines Verbrennungsmotors, insbesondere eines Verbrennungsmotor mit Miller-Steuerzeiten, wobei der Verbrennungsmotor ein Startluft-System (10) aufweist, das Verfahren umfassend:
- Starten des Verbrennungsmotors, indem das Startluft-System (10) einem Zylinder des Verbrennungsmotors intermittierend Startluft zuführt;
- Zuführen von Ladeluft zu dem Startluft-System (10) im Teillastbetrieb des Verbrennungsmotors von dem Ladeluftreceiver (1), so dass das Startluft-System (10) dem Zylinder intermittierend Ladeluft zuführt.
